Europäisches Patentamt

European Patent Office

Office européen des brevets

(11) Publication number: **0 441 432 A1**

## (12) EUROPEAN PATENT APPLICATION

(21) Application number: **91200204.5**

(22) Date of filing: **31.01.91**

(51) Int. Cl.5: **A47J 27/62, A47J 29/00**

(30) Priority: **31.01.90 NL 9000244**

(43) Date of publication of application:
**14.08.91 Bulletin 91/33**

(84) Designated Contracting States:
**AT BE CH DE DK ES FR GB IT LI LU NL SE**

(71) Applicant: **Vijn, Henderikus Willem Joseph**
**Verdiweg 663**
**NL-3816 KW Amersfoort(NL)**

(72) Inventor: **Vijn, Henderikus Willem Joseph**
**Verdiweg 663**
**NL-3816 KW Amersfoort(NL)**

(74) Representative: **Boelsma, Gerben Harm, Ir. et al**
**Octrooibureau Polak & Charlouis Laan**
**Copes van Cattenburch 80**
**NL-2585 GD Den Haag(NL)**

(54) **Egg-cooking aid.**

(57) An egg-cooking aid comprising a body (1) that is contained within a protective envelope and the heat transfer characteristics of which correspond to those of an egg, a temperature sensing element (3) being provided within said body (1), that cooperates with indication means adapted to indicate that a predetermined temperature which is representative of the desired consistency of the egg. According to the invention the temperature sensing element (3) is carried out as a sensor of the type which is brought to electrical activity when reaching the temperature which is representative of the desired consistency of the egg, said sensor (3) being part of an electrically powered control circuit (4,5,6), which also comprises an electrical circuit adapted to convert the temperature signal into a signal for activating an acoustic signal generator.

FIG 1

## EGG-COOKING AID.

The invention relates to an egg-cooking aid comprising a body which is contained in a protective envelope and the heat transfer characteristics of which correspond with those of an egg, a temperature sensing element being provided within said body, that cooperates with indication means adapted to indicate when a temperature has been reached which is representative of the desired consistency of the egg.

Such an aid is disclosed in US-A-4085493. In essence this well-known device is a liquid thermometer having its bulb-end embedded in a filling of heat insulating material, said device being immersed with the eggs in the water and having a temperature scale carrying the indications "soft", "medium" and "hard" at those temperature marks which are representative of the desired condition of the egg. The insulating filling functions to delay the transfer of heat from the cooking water towards the thermometer bulb in accordance with the slowness with which the heat transfer from the cooking water towards the interior of the egg is taking place. In the above patent specification it is also said to be of importance that the aid has the same starting temperature as the eggs to be boiled and for that purpose should be stored under the same conditions as the eggs, e.g. in a refrigerator.

It is a serious practical disadvantage of this well-known device that it requires a continuous watch on the temperature scale to secure an immediate observation of the moment of reaching the temperature which is representative of the desired consistency.

In accordance with the invention this disadvantage is removed in an effective way due to the temperature sensing element being formed as a sensor of the type which is brought to electrical activity when reaching the temperature which is representative of the desired consistency of the egg, said sensor being part of an electrically powered control circuit, which further comprises an electrical circuit adapted to convert the temperature signal into a signal for activating an acoustic signal generator.

It is to be noted, that it is known per se to make use of an acoustic signal generator when boiling eggs. DE-A-2904459 e.g. discloses an electrical cooking utensil for eggs, whereby an acoustic signal is generated, as soon as a predetermined amount of water is boiled away. In other cases a cooking utensil is involved, whereby an acoustic signal is produced when a predetermined temperature within the utensil is reached or a predetermined cooking time has passed.

A simple and compact embodiment of the aid of the invention is characterized in that the specific gravity of the egg-shaped envelope in combination with the contents of the same is lower than one and that the mass is distributed such that the center of gravity is located excentrically towards one end of the long axis, whereas the envelope consists of two parts, viz. and underlying part extending - in use - upwardly until over the waterline, and a part on top of the former part, the components of the control circuit being provided within the former part, the upper side of which is closed by said signal generator, the latter being covered - with an intermediary air space - by said upper part. In a preferred embodiment of the aid of the invention the electrical control circuit is formed as a radiographic transmitter, whereas the signal generator is making part of a correspondingly tuned in receiver.

In this embodiment of the aid of the present invention the comfort for the user is served in an optimal way, because the receiver can be simply carried along by the user.

This embodiment has also the advantage, that the (egg-shaped) envelope may be completely sealed. Moreover it enables to adjust the variable (temperature) which is representative of the desired condition, in a simple manner at the receiver, when e.g. it is desired to distinguish between "hard", "medium" or "soft", or when the user is used or not to immerse the eggs in cool water after cooking etc.

Further features of the invention will become apparent hereinafter when describing two embodiments of the invention with reference to the drawing.

Fig. 1 shows a vertical cross-section through the aid according to the present invention in a first embodiment;

fig. 2A and 2B show the aid according to the invention in a second embodiment and

fig. 3A and 3B show a block diagram of the emitter and receiver part respectively of the device according to fig. 2A and 2B.

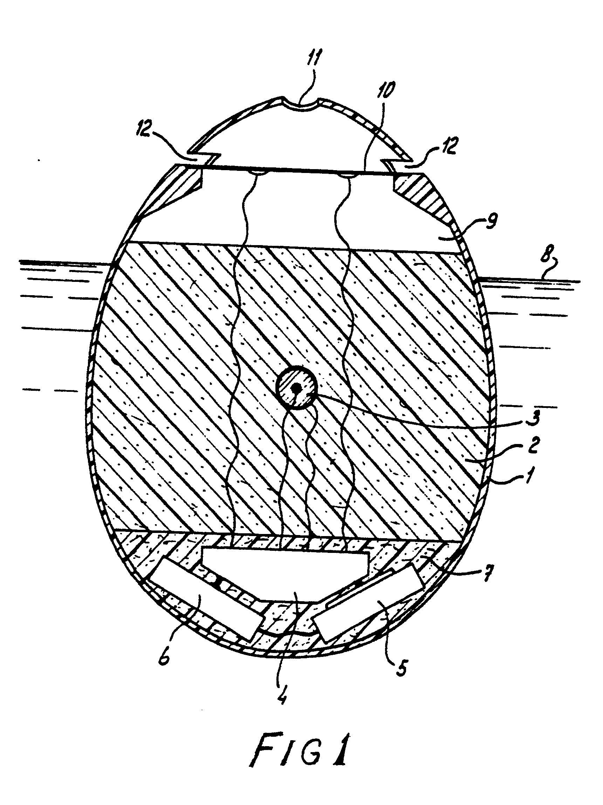

The aid shown in fig. 1 has an outer casing 1 of plastics material, which is shaped in the form of an egg and within which a first filling of a plastics material 2 is provided, having a heat transfer coefficient which corresponds to that of an egg. The specific gravity of the plastics material 2 is lower than that of water. Unter the plastics filling 2 a second filling of a plastics material 7 is provided. The plastics material 7 may have a good heat transfer coefficient and a specific gravity which is higher than that of water. On top of the plastics material 2 there is an air chamber 9, which is delimited by a piezo-electrical element 10. The top portion of the egg communicates with the surroundings through openings 11 and 12. Within the plastics material 2 a temperature-sensing element is embedded. Furthermore a battery 5, a switch 6 and an electronic circuit or processing unit 4 are provided in the plastics filling 7, which are interconnected in the sequence of mentioning. The input terminal of the electronic processing unit 4 is connected with the sensor 3, whereas its output terminal is connected to the piezo-electrical element 10.

When the aid and the eggs are placed in a pan of water - after having been stored with the eggs to be boiled under the same conditions - the device will raise itself up to the position shown in fig. 1 due to the differences in specific gravity of the masses 2 and 7.

It is assumed that the water is heated to boiling temperature after the eggs and the aid have been immersed.

When reaching a predetermined threshold value of the raising water temperature, the switch 6 which is open in the non-use condition so as to safe energy of the battery 5, will close and thereby connect the electronic circuit 4 to the battery 5 so as to prepare for receiving a signal from the sensor 3. The sensor 3 is adjusted to the temperature, which is representative of the desired consistency of the egg. In this connection it is to be noted that the coagulation point of an egg lies between 60 and 65° C.

The plastics material 2 is selected to get a "heat-up curve" for the aid that corresponds to that of the egg to be cooked. Consequently, as soon as the heart of the egg has reached the temperature which is representative of the desired consistency (hard, medium or soft) this temperature will also be observed by the sensor 3 provided in a corresponding location within the aid. The sensor will then supply a signal to the electronic circuit 4, which converts the same into a signal for activating the acoustic signal generator, the latter being in this case formed by the piezo-electrical element 10, that sealingly covers the underlying part of the plastic envelope 2 at some distance over the waterline.

The battery 5 may be a lithium-copper oxide battery or a lithium copper oxide phosphate battery. The switch 6 may be a bimetallic switch, whereas the commercially available NTC-resistors may be used for the sensor 3. The piezo-electrical element 10 is preferably formed of stainless steel.

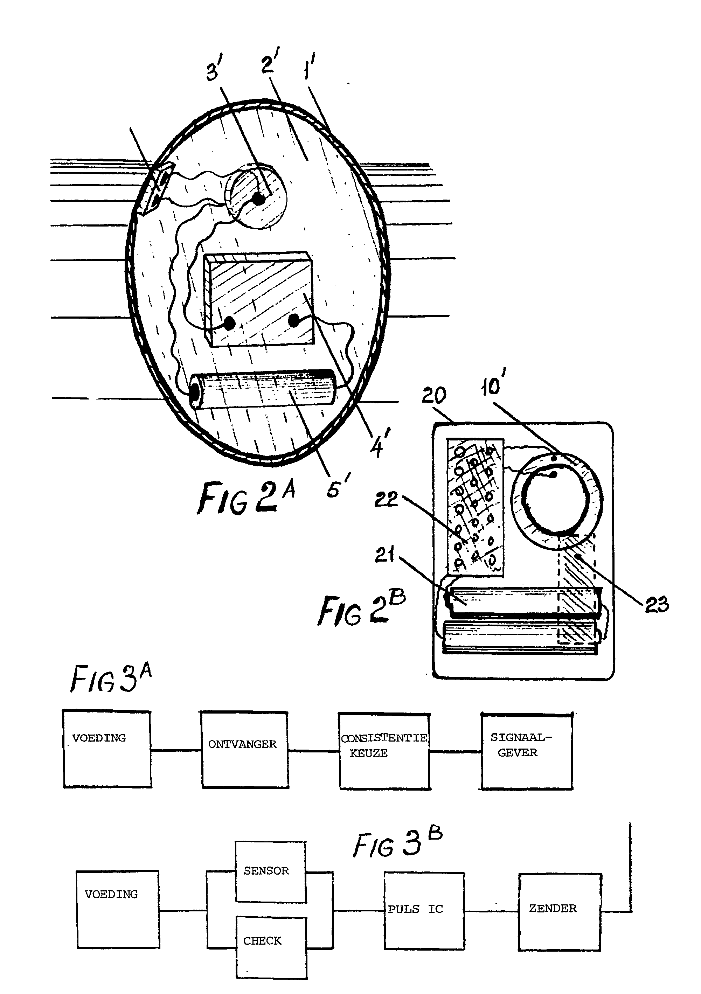

With the preferred embodiment according to fig. 2A-2B the part shown in fig. 2A forms the aid proper, the envelope 1' of which is formed of a suitable plastics material and is completely sealed and filled with a filling material 2', the heat transfer characteristics of which correspond to those of an egg.

The electrical components provided within the filling 2', such as the sensor 3', the electronic circuit 4', the battery 5', a block diagram of which is shown in fig. 3A, together form a radiographic transmitter.

In this case the acoustic signal generator 10' makes part of a receiver which is diametrically shown in fig. 2B and has been tuned in to said transmittor. The receiver has a housing 20 in which a radiographic receiving circuit 21 is provided that is fed by replaceable batteries 21. At 23 a selection switch is indicated, by means of which the desired consistency can be adjusted to "hard", "medium" or "soft". This selection switch may be simply a delay circuit, by means of which the signal received from the sensor 3' and based on "soft" may be supplied to the acoustic signal generator 10 in a more or less delayed way when "hard" or "medium" is desired.

For the transmitter and receiver parts of the aid in the embodiment according to fig. 2A-2B advantageously use can be made of the transmitter-receiver combinations which are commercially available in the field of micro-electronics.

The housing 10 of the receiver may have a compact shape and be provided with means for suspension to a wall or for clamping to the clothing of the user. In the embodiment according to fig. 2A-2B the aid may be adapted for use by hearing impaired people by providing a vibratory element in the receiver.

**Claims**

1. An egg-cooking aid comprising a body which is contained in a protective envelope and the heat transfer characteristics of which correspond with those of an egg, a temperature sensing element being provided within said body, that cooperates with indication means adapted to indicate when a temperature has been reached which is representative of the desired consistency of the egg, characterized in that the temperature sensitive element is formed as a sensor of the type which is brought to electrical activity when reaching the temperature which is representative of the desired consistency of the egg, said sensor being part of an electrically powered control circuit, which further comprises an electrical circuit adapted to convert the temperature signal into a signal for activating an acoustic signal generator.

2. An aid as claimed in claim 1, characterized in that the specific gravity of the egg-shaped envelope in combination with the contents of the same is lower than one and that the mass is distributed such that the center of gravity is located excentrically towards one end of the long axis whereas the envelope consists of two parts, viz. an underlying part extending - in use - upwardly until over the waterline, and a part on top of the former part, the components of the control circuit being provided within the former part, the upper side of which is closed by said signal generator, the latter being covered - with an intermediary air space - by said upper part.

3. An aid as claimed in claim 1, characterized in that the electrical control circuit is formed as a radiographic transmitter, whereas the signal generator is making part of a correspondingly tuned in receiver.

4. An aid as claimed in claims 1-3, characterized in that a switch is provided in the electrical control circuit that is normally open and is adapted to close when the temperature exceeds a predetermined threshold value.

5. An aid as claimed in claim 3, characterized in that the receiver part is provided with a selector, by means of which the signal received from the transmitter part may be transmitted to the signal device with a selected delay.

FIG 1

FIG 2^A

FIG 2^B

FIG 3^A

| VOEDING | ONTVANGER | CONSISTENTIE KEUZE | SIGNAAL-GEVER |

FIG 3^B

| VOEDING | SENSOR / CHECK | PULS IC | ZENDER |

European
Patent Office

**EUROPEAN SEARCH
REPORT**

Application Number

**EP 91 20 0204**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 085 493  (CHADWICK) <br> * the whole document EP 912002040200002CUSA4085493 6 2 2 3 A 2 * | 1,3-5 | A 47 J 27/62 <br> A 47 J 29/00 |
| Y | FR-A-2 535 833  (LEVALOIS ET AL) <br> * page 1, line 17 - page 3, line 30 * * page 10, line 5 - page 11, line 36; claims 11,13; figures 2,5,6 * | 1,3-5 | |
| A | DE-A-3 421 322  (GROPPLER) <br> * page 4, line 20 - page 7, line 30; figures * | 1,4 | |
| D,A | DE-A-2 904 459  (BOSCH-SIEMENS HAUSGERATE GMBH) <br> * page 3, line 24 - page 4, line 6; figures * | 1,4 | |
| A | US-A-2 430 290  (HANN) <br> * column 1, line 1 - column 3, line 1; figures * | 1 | |

TECHNICAL FIELDS
SEARCHED (Int. Cl.5)

A 47 J
G 01 K

The present search report has been drawn up for all claims

| Place of search | Date of completion of search | Examiner |
|---|---|---|
| The Hague | 13 May 91 | BODART P.A. |